# EUROPÄISCHE PATENTSCHRIFT

(11) **EP 0 993 925 B1**
(45) Veröffentlichungstag und Bekanntmachung des Hinweises auf die Patenterteilung: **19.06.2002**
(21) Anmeldenummer: 99810781.7
(22) Anmeldetag: 01.09.1999
(51) Int. Cl.: B29C 45/14, H01R 43/24

(54) **Formschlüssige Einbettung eines Metallteiles**
Positive embedding of a metallic part
Incorporation à liaison de forme d'une partie métallique

(30) Priorität: 18.09.1998 DE 19842725
(43) Veröffentlichungstag der Anmeldung: 19.04.2000
(73) Patentinhaber: MICAFIL AG, 8048 Zürich (CH)
(72) Erfinder: Schulz, Daniel, 8802 Kilchberg (CH); Bodmer, Urs, 5400 Baden (CH)
(74) Vertreter: ABB Patent Attorneys

(56) Entgegenhaltungen:
- DE-U- 6 801 992
- FR-A- 1 137 505
- GB-A- 2 003 674
- GB-A- 2 110 587

## Beschreibung

### TECHNISCHES GEBIET

Bei der Erfindung wird ausgegangen von einer formschlüssigen Einbettung nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus dem Buch von Prof. Dr.-Ing Siegfried Hildebrand, "Feinmechanische Bauelemente", 4. Auflage, VEB Verlag Technik Berlin, 1980, S. 167 - 172, bekannt ist. Dort sind mehrere Gestaltungen von Einbettungen angegeben, bei denen das einzubettende Teil starr mit einem plastisch verformbaren, gießbaren oder preßbaren Werkstoff, im allgemeinen aus einer Mischung aus Kunstharz und verschiedenen Füllstoffen, verbunden und formschlüssig gegen ein Verschieben und Verdrehen gesichert ist. Einbettungen stehen aufgrund ihrer Fertigung in heißem Zustand unter erheblichen inneren Spannungen. Trägt das einzubettende Teil weder Rändel noch Gewinde, so läßt sich die Lagesicherung durch Einschnitte, Längsschlitze, Aufspreizen oder Breitschlagen erreichen. Einbettungen in Plastwerkstoffe dienen oft dazu, Metallteile elektrisch zu isolieren.

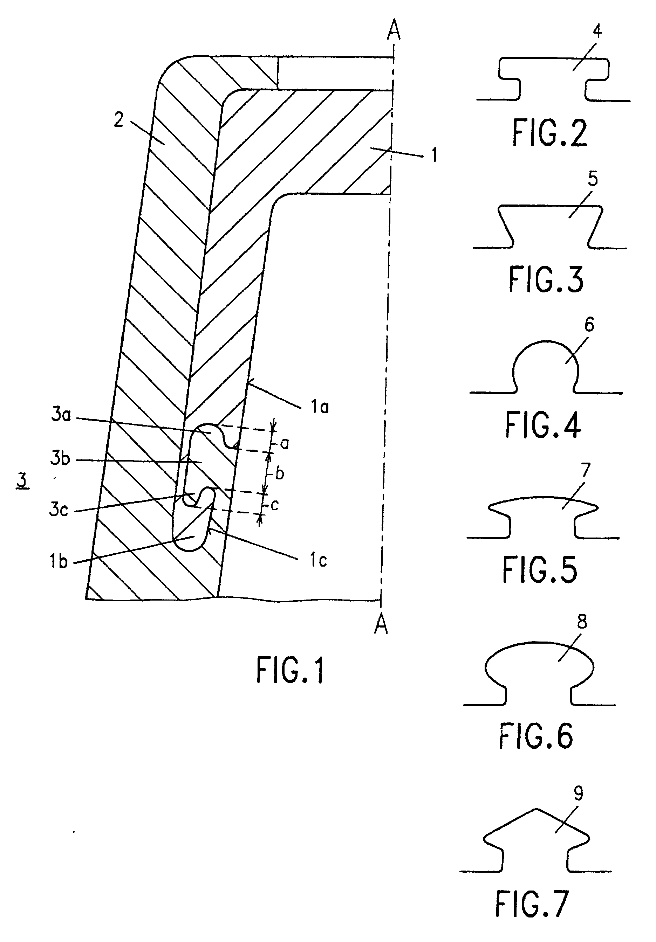

Werden hohlzylindrische, metallische Armaturen vergossen, so kann es bei unterschiedlichen Ausdehnungskoeffizienten der Verbundwerkstoffe, ohne besondere Sicherungsmaßnahme, beim Abkühlen an der Innenfläche 1c eines Metallteiles 1, vgl. Fig. 1, zu Ablösungen kommen. Das ist vor allem bei elektrisch beanspruchten Bauteilen gefährlich.

### DARSTELLUNG DER ERFINDUNG

Die Erfindung, wie sie im Patentanspruch 1 definiert ist, löst die Aufgabe, eine formschlüssige Einbettung der eingangs genannten Art derart weiterzuentwickeln, daß ein einzubettendes Metallteil im gesamten Temperaturbereich der Anwendung ablösungsfrei mit einem einbettenden Kunststoff verbunden bleibt, auch bei unterschiedlichen Ausdehnungskoeffizienten der Verbundwerkstoffe.

Vorteilhafte Ausgestaltungen der Erfindung sind in den abhängigen Patentansprüchen definiert.

Ein Vorteil der Erfindung besteht darin, daß elektrisch hoch beanspruchte Bauteile mit einfachen Maßnahmen elektrisch gut und ablösungsfrei gefertigt werden können.

### KURZE BESCHREIBUNG DER ZEICHNUNG

Die Erfindung wird nachstehend anhand von Ausführungsbeispielen erläutert. Es zeigen:
- Fig. 1: einen Ausschnitt einer Kopfarmatur eines Kabelendverschlusses in einer Querschnittsansicht und
- Fig. 2 - 7: verschieden Formen von Aussparungen im Metallteil der Kopfarmatur gemäß Fig. 1.

### WEGE ZUR AUSFÜHRUNG DER ERFINDUNG

Figur 1 zeigt einen Ausschnitt eines Kabelendverschlusses in einer Querschnittsansicht mit einer rotationssymmetrischen Metallarmatur bzw. einem tiegelförmigen Metallteil (1), dessen Seitenwand die Form eines hohlen Kegelstumpfes aufweist. Eine Symmetrieachse des Metallteiles (1) ist mit (A) bezeichnet. Nahe einem Kegelstumpfende (1b) des Metallteiles (1) mit dem größten Kegelstumpfdurchmesser ist von einer Kegelstumpfinnenfläche (1a) dieses Metallteiles (1) her eine pilzförmige Aussparung (3) eingearbeitet bzw. vorgesehen. Das Metallteil (1) ist in einem mittleren Aussparungsbereich (3b) mit einer Länge (b) von 13 mm nicht hinterschnitten. In einem daran angrenzenden oberen Aussparungsbereich (3a) mit einer Länge (a) von 3 mm und in einem angrenzenden unteren bzw. endseitigen Aussparungsbereich (3c) mit einer Länge (c) von 6 mm ist das Metallteil (1) hinterschnitten. Die Länge (b) sollte kleiner als 10 cm sein. Der mittlere Aussparungsbereich (3b) sollte vom unteren Ende des Metallteiles (1) weniger als 10 cm Abstand haben.

Dieses Metallteil (1) weist im Bereich seines Kegelstumpfendes (1b) einen kleineren Querschnitt auf als in seinem oberen Kegelstumpfbereich bis zu dieser pilzförmigen Aussparung (3). Das Metallteil (1) ist kegelstumpfaußenseitig sowie das Kegelstumpfende (1b) umgreifend und die pilzförmige Aussparung (3) ausfüllend formschlüssig von einem elektrisch isolierenden Gießharzkörper bzw. Kunststoffteil (2) umgeben. Dieses Kunststoffteil (2) bildet am Kegelstumpfende (1b) und im Bereich der pilzförmigen Aussparung (3) die kegelstumpfförmige Verlängerung der Kegelstumpfinnenfläche (1a) des Metallteiles (1). Das Metallteil (1) und das Kunststoffteil (2) können unterschiedliche Ausdehnungskoeffizienten aufweisen.

Die angegebene Einbettung eignet sich besonders für Armaturen von Kabelenden von Mittel- und Hochspannungskabeln. Das Metallteil (1) kann Teil einer Kabelmuffe oder eines Kabelverbinders oder eines Kabelendverschlusses sein.

Die Fig. 2 - 7 zeigen zur pilzförmigen Aussparung (3) alternative Aussparungen (4) - (9) mit Hinterschneidungen des Metallteiles (1).
Dabei zeigen:
Fig. 2 eine rechteckige Aussparung (4),
Fig. 3 eine schwalbenschwanzförmige Aussparung (5),
Fig. 4 eine kugelförmige Aussparung (6),
Fig. 5 eine nietförmige Aussparung (7),
Fig. 6 eine pollerförmige Aussparung (8) und
Fig. 7eine dreieckige Aussparung (9).

Wichtig ist, daß jede der Aussparungen (3) - (9) wenigstens einen Aussparungsbereich mit einer Hinterschneidung, z. B. (3a) oder (3c) aufweist.

Als Material für das Kunststoffteil (2) kann ein elektrisch isolierender Duroplastwerkstoff oder ein Elastomer oder ein Thermoplast verwendet werden. Vorzugsweise verwendet man ein duroplastisches Gießharz, welches mit dem Metallteil (1) verklebt wird.

### BEZEICHNUNGSLISTE

- 1: einzubettendes Teil, Metallarmatur, Metallteil
- 1a: Kegelstumpfinnenfläche von 1
- 1b: Kegelstumpfende von 1
- 1c: Kegelstumpfinnenfläche von 1b
- 2: Kunststoffteil, Gießharzkörper
- 3: pilzförmige Aussparung in 1
- 3a, 3c: Aussparungsbereiche von 3 mit Hinterschneidung von 1
- 3b: mittleren Aussparungsbereich von 3 ohne Hinterschneidung von 1
- 4: rechteckförmige Aussparung
- 5: schwalbenschwanzförmige Aussparung
- 6: kugelförmige Aussparung
- 7: nietförmige Aussparung
- 8: pollerförmige Aussparung
- 9: dreieckige Aussparung
- A: Symmetrieachse von 1
- a: Länge von 3a
- b: Länge von 3b
- c: Länge von 3c

## Patentansprüche

1. Formschlüssige Einbettung eines mit Hochspannung beaufschlagten Metallteiles (1), welches insbesondere Teil eines Kabelendverschlusses eines elektrischen Kabels ist, in ein elektrisch isolierendes Kunststoffteil (2), **dadurch gekennzeichnet**,
a) dass das Metallteil (1) mindestens eine ringförmige Aussparung (3 - 9) mit mindestens einer Hinterschneidung (3a, 3c) dieses Metallteiles (1) aufweist,
b) dass das Metallteil (1) rotaticnssymmetrisch bezüglich einer Symmetrieachse (A) ausgebildet ist,
c) dass diese ringförmige Aussparung (3 - 9) mit dem Material des Kunststoffteiles (2) gefüllt ist,
d) dass diese Füllung als Teil des Kunststoffteiles (2) ausgebildet ist, und
e) dass das Kunststoffteil (2) mittels eines Giessvorgangs aufgebracht wird.

2. Formschlüssige Einbettung nach Anspruch 1, **dadurch gekennzeichnet, dass** das Metallteil (1) Teil einer Kabelmuffe oder eines Kabelverbinders ist.

3. Formschlüssige Einbettung nach einem der vorhergehenden Ansprüche, **dadurch gekennzeichnet, dass** das Material des Kunststoffteiles (2) ein Duroplast oder Elastomer oder Thermoplast ist.

4. Formschlüssige Einbettung nach Anspruch 3, **dadurch gekennzeichnet, dass** das Material des Kunststoffteiles (2) ein duroplastisches Giessharz ist.

5. Formschlüssige Einbettung nach einem der vorhergehenden Ansprüche, **dadurch gekennzeichnet**,
a) dass die mindestens eine Aussparung (3 - 9) pilzförmig oder
b) rechteckig oder
c) schwalbenschwanzförmig oder
d) kugelförmig oder
e) nietförmig oder
f) pollerförmig oder
g) dreieckig ausgebildet ist.

## Claims

1. Form-fitting embedment of a metal part (1) which is subjected to high voltage and is, in particular, part of a cable end closure of an electric cable into an electrically insulating plastic part (2), **characterized**
a) **in that** the metal part (1) has at least one annular recess (3 - 9) with at least one undercut (3a, 3c) of this metal part (1),
b) **in that** the metal part (1) is formed rotationally symmetrically with respect to an axis of symmetry (A),
c) **in that** this annular recess (3 - 9) is filled with the material of the plastic part (2),
d) **in that** this filling is formed as part of the plastic part (2), and
e) **in that** the plastic part (2) is applied by means of a casting operation.

2. Form-fitting embedment according to Claim 1, **characterized in that** the metal part (1) is part of a cable sleeve or a cable connector.

3. Form-fitting embedment according to one of the preceding claims, **characterized in that** the material of the plastic part (2) is a thermoset or elastomer or thermoplastic.

4. Form-fitting embedment according to Claim 3, **characterized in that** the material of the plastic part (2) is a thermosetting casting resin.

5. Form-fitting embedment according to one of the preceding claims, **characterized**
a) **in that** the at least one recess (3 - 9) is of a mushroom-shaped form or
b) rectangular form or
c) dovetail-shaped form or
d) spherical form or
e) rivet-shaped form or
f) bollard-shaped form or
g) triangular form.

## Revendications

1. Incorporation géométrique d'une pièce en métal (1) sous haute tension, laquelle fait notamment partie d'une terminaison de câble d'un câble électrique, dans une pièce en matière plastique (2) électriquement isolante, **caractérisée en ce**
a) **que** la pièce en métal (1) présente au moins un évidement annulaire (3 - 9) avec au moins une contre-dépouille (3a, 3c) de cette pièce en métal (1),
b) **que** la pièce en métal (1) est configurée selon une symétrie de révolution par rapport à un axe de symétrie (A),
c) **que** cet évidement annulaire (3 - 9) est rempli du matériau de la pièce en matière plastique (2),
d) **que** ce remplissage fait partie intégrante de la pièce en matière plastique (2), et
e) **que** la pièce en matière plastique (2) est appliquée au moyen d'une opération de coulée.

2. Incorporation géométrique selon la revendication 1, **caractérisée en ce que** la pièce en métal (1) fait partie d'une cosse pour câble ou d'un connecteur pour câble.

3. Incorporation géométrique selon l'une des revendications précédentes, **caractérisée en ce que** le matériau de la pièce en matière plastique (2) est une résine thermodurcissable, un élastomère ou un thermoplastique.

4. Incorporation géométrique selon la revendication 3, **caractérisée en ce que** le matériau de la pièce en matière plastique (2) est une résine de coulée thermodurcissable.

5. Incorporation géométrique selon l'une des revendications précédentes, **caractérisée en ce**
a) **qu'**au moins un évidement (3 - 9) a la forme d'un champignon ou
b) d'un rectangle ou
c) d'une queue d'aronde ou
d) d'une sphère ou
e) d'un rivet ou
f) d'une bite d'amarrage ou
g) d'un triangle.
